(19) **Europäisches Patentamt**

**European Patent Office**

**Office européen des brevets**

(11) **EP 1 722 127 A1**

(12) **EUROPEAN PATENT APPLICATION**
published in accordance with Art. 158(3) EPC

(43) Date of publication:
**15.11.2006 Bulletin 2006/46**

(51) Int Cl.:
*F16G 5/18* (2006.01)   *F16H 9/24* (2006.01)

(21) Application number: **05720651.8**

(22) Date of filing: **07.03.2005**

(86) International application number:
**PCT/JP2005/004380**

(87) International publication number:
**WO 2005/085673 (15.09.2005 Gazette 2005/37)**

(84) Designated Contracting States:
**DE FR GB IT**

(30) Priority: **05.03.2004 JP 2004062919**

(71) Applicant: **JTEKT Corporation**
**Chuo-ku,**
**Osaka-shi**
**Osaka 542-8502 (JP)**

(72) Inventors:
 • **YASUHARA, Shinji,**
 **c/o JTEKT Corporation**
 **Osaka-shi, Osaka 542-8502 (JP)**

 • **KAMAMOTO, Shigeo,**
 **c/o JTEKT Corporation**
 **Osaka-shi, Osaka 542-8502 (JP)**
 • **FUKUI, Nobuki,**
 **c/o JTEKT Corporation**
 **Osaka-shi, Osaka 542-8502 (JP)**

(74) Representative: **Steil, Christian et al**
 **Witte, Weller & Partner,**
 **Postfach 10 54 62**
 **70047 Stuttgart (DE)**

(54) **POWER TRANSMISSION CHAIN AND POWER TRANSMISSION DEVICE**

(57)     A power transmission chain (1) includes a plurality of link units (51, 52, and 53) aligned in the traveling direction of chain (X), and each link unit (51, 52, and 53) includes a plurality of links (2) aligned in the width direction of chain (W). Guiding members (12 and 13) are respectively provided correspondingly to connecting members (50) that link the link units (51, 52, and 53)' to one another in a manner so as to be bendable. Each link (2) includes first and second through-holes (7 and 8) aligned in the traveling direction of chain for inserting a corresponding connecting member (50) therethrough, and a communication groove (14) through which the first and second through-holes (7 and 8) communicate with each other. Each connecting member (50) includes first and second power transmission members (3 and 4). Either one of the first and second power transmission members (3 and 4) is guided by the guiding members (12 and 13), and consequently the one power transmission member comes into contact with the other power transmission member in a contact state including at least one of rolling contact and sliding contact.

FIG. 4

EP 1 722 127 A1

**Description**

1. Field of the Invention

The present invention relates to a power transmission chain and a power transmission device.

2. Description of Related Art

In an endless power transmission chain used in a power transmission device, such as a CVT (Continuously Variable Transmission) for an automobile, a plurality of link units aligned in the traveling direction of chain are normally linked to one another via a pair of pins. Each link unit includes a plurality of links aligned in the width direction of chain that is orthogonal to the traveling direction of chain. Each link is provided with a pair of through-holes aligned in the traveling direction of chain, and the pair of pins described above is loosely fit into the respective through-holes. Further, the outermost link in the width direction of chain is provided with projection that engage with the respective pins so as to function as a fall-off stopper link (For example, see Japanese Unexamined Utility Model Publication No. 01-108444).
Further, there is another power transmission chain in which first and second driving pins that come into rolling contact with each other are inserted respectively through a pair of through-holes made in the link, so that the corresponding links are linked to one another via these first and second driving pins (for example, see Japanese Unexamined Patent Publication No. 08-312725).
The fall-off stopper link in the former power transmission chain undergoes tensile load such that increases the distance in a pair of the through-holes.
In the latter power transmission chain, guiding portions are provided on the inner peripheral surfaces of the through-holes in each link, and mutual rolling and contacting movements of the first and second driving pins are guided by the guiding portions. In this case, there is a need to provide guiding portions at strict dimensional accuracy on the inner peripheral surfaces of the through-holes in all the links, which increases the manufacturing costs. In addition, when the power transmission chain is assembled, a work to insert the respective driving pins through the through-holes in the links becomes complicated, and the manufacturing costs are also increased from this regard.
An object of the invention is to provide a power transmission chain and a power transmission device at lower manufacturing costs without the need for the links to perform the function of guiding power transmission members.

Summary of the Invention

In order to achieve the above objects, a preferred embodiment of the present invention provides a power transmission chain, including: a plurality of link units aligned in a traveling direction of chain; a plurality of connecting members that link the plurality of link units to one another in a manner so as to be benedable; and guiding members provided correspondingly to the respective connecting members. Each link unit includes a plurality of links aligned in a width direction of chain orthogonal to the traveling direction of chain. Each link includes first and second through-holes aligned in the traveling direction of chain for a corresponding connecting member to be inserted therethrough. Each connecting member includes first and second power transmission members. Either one of the first and second power transmission members is guided by the guiding member, and consequently one of the power transmission members moves to the other transmission member while coming into contact with the other power transmission member in a contact state including at least one of rolling contact and sliding contact.
According to the embodiment above, because the guiding member performs the function of guiding relative movements of the first and second power transmission members, the links do not have to function as the guide. This eliminates the need to provide a guiding portion on the inner peripheral surface of the through-hole in the link, which can in turn reduce the manufacturing costs. Further, when the power transmission chain is assembled, a work to insert the power transmission member through the through-hole in the link becomes easier, and the manufacturing costs can be reduced from this regard, too. Because each connecting member is provided with the guiding member, tensile force such that is applied to the link will not act on the guiding member. Consequently, the durability can be increased.

Brief Description of the Drawings

FIG. 1 is a perspective view schematically showing the configuration of a major portion in a chain type CVT including a power transmission chain according to one embodiment of the present invention.
FIG. 2 is an enlarged partial cross section of a drive pulley (driven pulley) and the chain of the CVT.
FIG. 3 is a perspective view schematically showing the configuration of a major portion of the power transmission chain.

FIG. 4 is a cross section of a major portion of the power transmission chain showing three link units.

FIG. 5 is a cross section taken along the line I-I of FIG. 4.

FIG. 6 is a cross section taken along the line II-II of FIG. 4.

FIG. 7A and FIG. 7B are schematic cross sections of guiding members and driving pins showing loci of one driving pin when this driving pin comes into rolling contact with the other driving pin.

FIG. 8 is a plane cross section showing a major portion of a power transmission chain according to another embodiment of the invention.

FIG. 9 is a cross section taken along the line III-III of FIG. 8.

FIG. 10A, FIG. 10B, and FIG. 10C are schematic side views of the drive pulley and the driven pulley used to describe misalignments.

FIG. 11 is a cross section of a major portion of a power transmission chain according to a further embodiment of the present invention.

FIG. 12 is a front view of a major portion of a power transmission chain according to still another embodiment of the present invention.

Description of the Preferred Embodiments

Preferred embodiments of the present invention will be described with reference to the accompanying drawings.

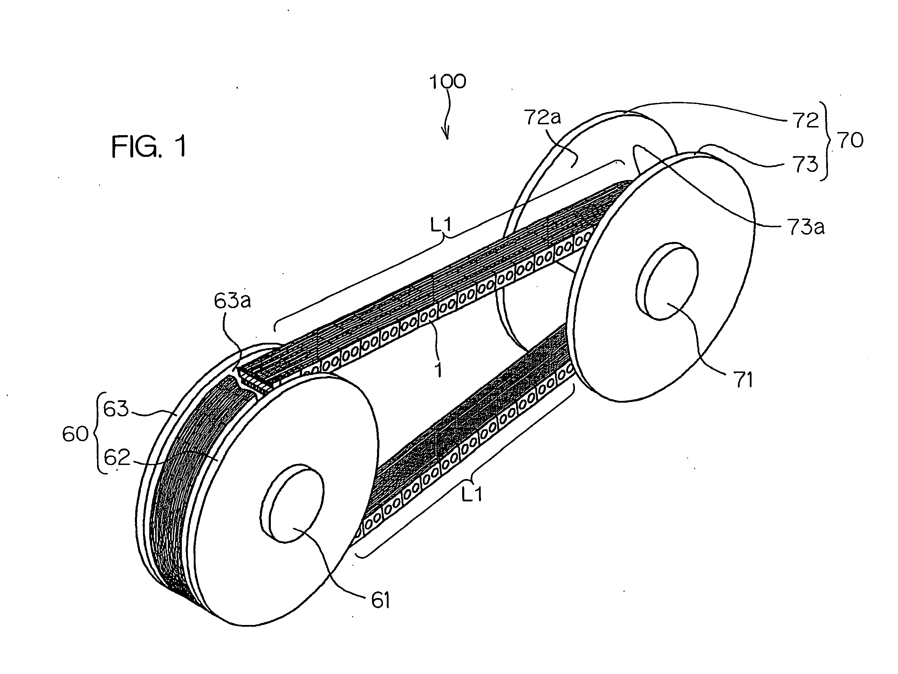

FIG. 1 is a partially broken perspective view schematically showing the configuration of a major portion in a chain-type CVT (hereinafter, simply referred to also as the CVT on occasion) as a power transmission device including a power transmission chain according to one embodiment of the present invention.

Referring to FIG. 1, a CVT 100 is incorporated into a vehicle, such as an automobile. The CVT 100 includes a drive pulley 60 made of metal (structural steel or the like) serving as a first pulley as a one in a pair of pulleys, a driven pulley 70 made of metal (structural steel or the like) serving as a second pulley as the other pulley in the pair, and an endless power transmission chain 1 (hereinafter, simply referred to also as the chain on occasion) wound across these pulleys 60 and 70.

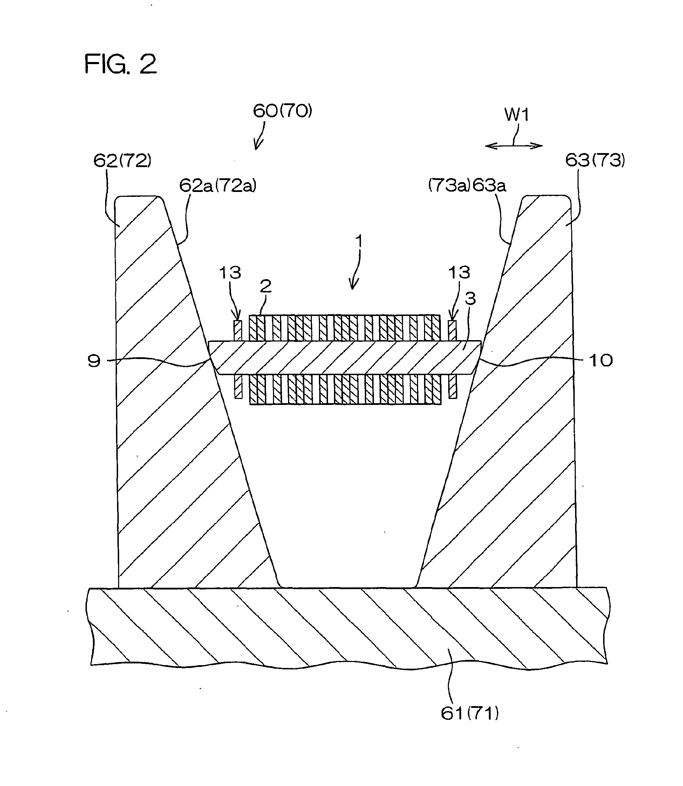

The drive pulley 60 and the driven pulley 70 comprise diameter-variable pulleys. Referring to FIG. 1 and FIG. 2, which is an enlarged cross section of a major portion of the CVT 100, the drive pulley 60 is attached to an input shaft 61 that is linked to the driving source of a vehicle to be able to transmit power in a such a manner that they are allowed to rotate integrally. The drive pulley 60 includes a stationary sheave 62 and a rotary sheave 63. The stationary sheave 62 and the rotary sheave 63 respectively include a pair of sheave surfaces 62a and 63a that oppose each other. Each of the sheave surface 62a and 63a includes an inclined plane in the shape of a circular conical surface. A groove is defined between these sheave surfaces 62a and 63a, and the chain 1 is held by being caught in a space of this groove at a high pressure.

Further, a hydraulic actuator (not shown) used to change the width of the groove is connected to the rotary sheave 63, and the width of the groove is changed by moving the rotary sheave 63 in the axial direction of the input shaft 61 (crosswise direction of FIG. 2) during shifting. This causes the chain 1 to move in the radial direction of the input shaft 61 (vertical direction of FIG. 2), which enables an effective radius of the drive pulley 60 for the chain 1 to be changed.

Referring to FIG. 2, reference numerals in parentheses denote portions of the driven pulley 70 corresponding to those of the drive pulley 60. As are shown in FIG. 1 and FIG. 2, the driven pulley 70 is attached to an output shaft 71 that is linked to a drive wheel (not shown) to be able to transmit power in a such a manner that they are allowed to rotate integrally. As with the drive pulley 60, it includes a stationary sheave 73 and a rotary sheave 72 respectively having a pair of sheave surfaces 73a and 72a that oppose each other and define a groove in which the chain 1 is held at a high pressure.

As with the rotary sheave 63 of the drive pulley 60, a hydraulic actuator (not shown) is connected to the rotary sheave 72 of the driven pulley 70, and the width of the groove is changed by moving the rotary sheave 72 during shifting. This causes the chain 1 to move, which enables the effective radius of the driven pulley 70 for the chain 1 to be changed.

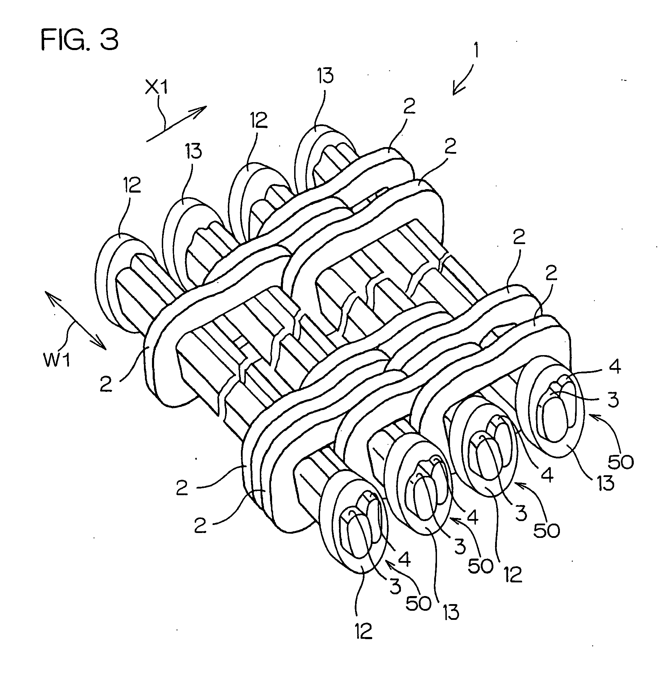

Referring to FIG. 2 and FIG. 3, which is a perspective view schematically showing the configuration of a major portion of the power transmission chain (hereinafter, simply referred to also as the chain on occasion), the chain 1 includes plate-shaped links 2 aligned in a plurality of lines, and a plurality of connecting members 50 that link the corresponding links 2 with respect to one another. Each connecting member 50 includes a first driving pin 3 and a second driving pin 4 as power transmission members.

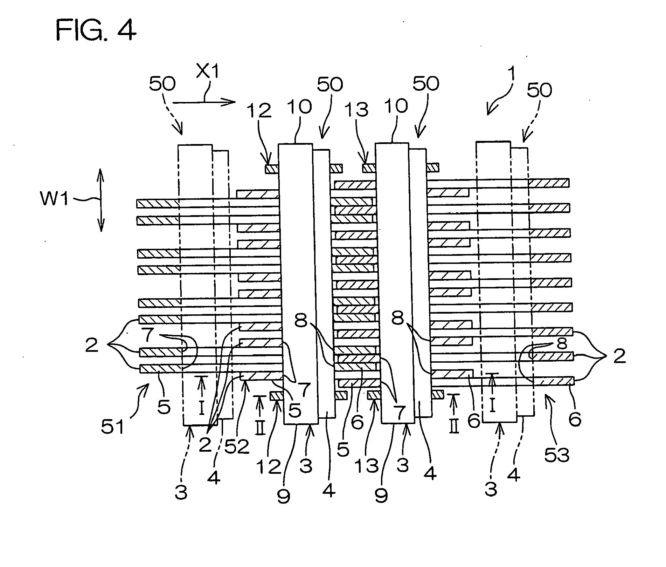

FIG. 4 is a cross section of a major portion of the chain 1. The chain 1 includes a plurality of link units aligned in the traveling direction X1 of chain. In FIG. 4, of these link units, first, second, and third link units 51, 52, and 53 are shown. The link units 51, 52, and 53 are connected to one another via the connecting members 50 each including the first and second driving pins 3 and 4 in a manner so as to be bendable. Referring to FIG. 3 and FIG. 4, first or second guiding member 12 or 13 is provided correspondingly to each connecting member 50.

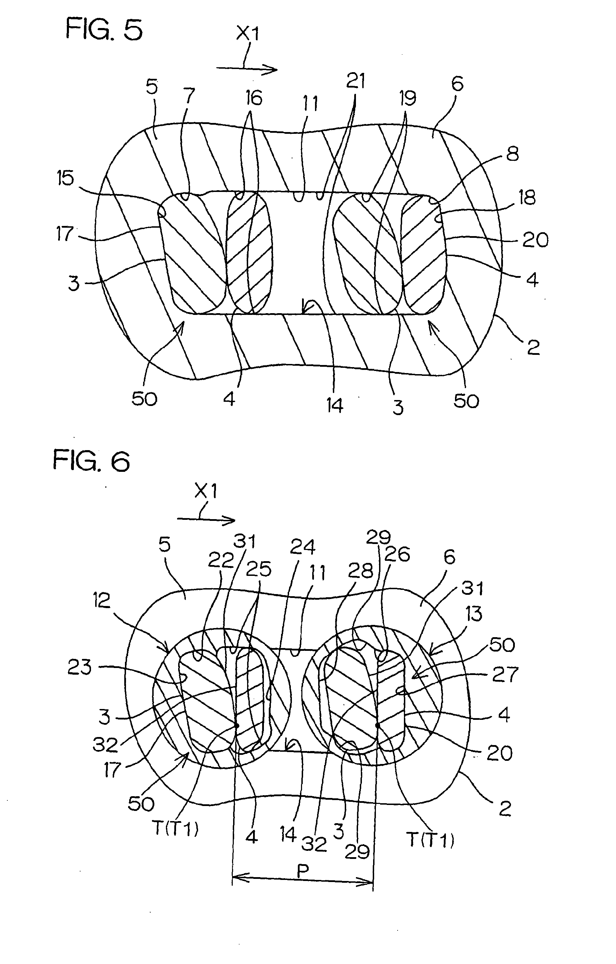

FIG. 5 is a cross section taken along the line I-I of FIG. 4, and FIG. 6 is a cross section taken along the line II-II of FIG. 4.

Referring to FIG. 4 and FIG. 5, each link 2 includes a front end portion 5 and a rear end portion 6 serving as a pair of end portions aligned at the beginning and ending in the traveling direction X1 of chain, and a front through-hole 7 and a rear through-hole 8 are made in the end portions 5 and 6, respectively.

The front through-hole 7 in the link 2 of the first link unit 51 and the rear through-hole 8 in the link 2 of the second link unit 52, which correspond to each other, are aligned in the width direction W1 of chain, that is orthogonal to the traveling direction X1 of chain. The links 2 of the first and second link units 51 and 52 are linked to each other in a manner so as to be bendable by the first and second driving pins 3 and 4 that are inserted into these through-holes 7 and 8.

The first driving pin 3 is fixed by being press-fit into the front through-hole 7 in the corresponding link 2, which limits its relative rotations with respect to this link 2, and at the same time it is fit into the rear through-hole 8 in the corresponding link 2 while leaving a fine space, for example, by loose fit, which enables its relative movements with respect to this link 2.

The first driving pin 3 is fixed, for example, by being press-fit into the front through-hole 7 in each link 2 of the first link unit 51 so that the relative rotations of the first link unit 51 with respect to each link 2 are limited, while at the same time, it is loosely fit into the rear through-hole 8 in each link 2 of the second link unit 52 so that the relative movements with respect to each link 2 of the second link unit 52 are allowed.

Likewise, the front through-hole 7 in the link 2 of the second link unit 52 is aligned next to the rear through-hole 8 in the link 2 of the third link unit 53 in the width direction W1 of chain, and the links 2 of the second and third link units 52 and 53 are linked to one another by the first driving pin 3 that is inserted through each of these through-holes 7 and 8. That is to say, the first driving pin 3 is not only fixed by being press-fit into the front through-hole 7 in each link 2 of the second link unit 52, but it is also loosely fit into the rear through-hole 8 in each link 2 of the third link unit 53.

Although it is not shown in the drawing, the links 2 of the third and fourth link units are subsequently linked to one another, and in this manner, two link units are linked to each other sequentially. The chain 1 as a whole is therefore formed in an endless shape.

Referring to FIG. 2 and FIG. 4, a pair of end portions of the first driving pin 3 protrudes in the width direction W1 of chain, from a pair of the links 2 of the chain 1 disposed at the outermost position in the width direction W1 of chain. Power transmission surfaces 9 and 10 used for contact on the sheave surface are provided on a pair of end faces of the first driving pin 3. Because the first driving pin 3 directly contributes to power transmission using its power transmission surfaces 9 and 10, it is made of a high-strength material, such as a bearing steel (for example, SUJ2).

Meanwhile, as is shown in FIG. 4, the second driving pin 4 (referred to also as a strip or interpiece) is a rod-shaped body formed to be slightly shorter than the first driving pin 3 to avoid contact with the sheave surfaces of the drive pulley and the driven pulley described below. The second driving pin 4 is fixed by being press-fit into the rear through-hole 8 in the corresponding link 2, which limits relative movements with respect to this link 2, and at the same time, it is loosely fit into the front through-hole 7 in the corresponding link 2 by leaving a fine space, for example, by loose fit, which enables relative movements with respect to this link 2.

The second driving pin 4 is, for example, loosely fit into the front through-hole 7 in each link 2 of the first link unit 51 so that the relative movements with respect to each link 2 of the first link unit 51 are allowed, and at the same time it is fixed by being press-fit into the rear through-hole 8 in each link 2 of the second link unit 52 so that the relative rotations with respect to each link 2 of the second link unit 52 are limited.

This embodiment is characterized in that the first and second guiding members 12 and 13, serving as guiding members corresponding to the respective connecting members 50 of the links 2, are provided alternately in the traveling direction X1 of chain.

By being guided by the guiding members 12 and 13, the second driving pin 4 is allowed to move relatively in a state where it comes into rolling and sliding contact (contact including at least one of rolling contact and sliding contact) with the first driving pin 3 disposed adjacently in the traveling direction X1 of chain. This configuration enables bending between the adjacent link units to be achieved while keeping the first driving pin 3 to hardly rotate with respect to the sheave surface of the pulley. It is thus possible to secure high transmission efficiency by reducing a frictional loss.

To be more concrete, as is shown in FIG. 5, the front through-hole 7, the rear through-hole 8, and a communication groove 11 through which these front through-hole 7 and rear through-hole 8 communicate with each other are formed in each link 2. These front through-hole 7, the communication groove 11, and the rear through-hole 8 together form a long hole 14 extending in the traveling direction X1 of chain. In order to suppress the occurrence of stress concentration, it is preferable that the peripheral surface of the long hole 14 is formed at a curvature as large as possible in a shape having no local projections and dents.

The front through-hole 7 is positioned at one end (front end portion 5 of the link 2) of the long hole 14 with respect to the traveling direction X1 of chain, and defined by a fitting portion 15 and a loosely fitting portions 16 provided on the peripheral edge of the long hole 14. The fitting portion 15 is formed in a curved shape to correspond to the shape of a fit portion 17 formed in a part of the peripheral surface of the first driving pin 3. The loosely fitting portions 16 are disposed at positions closer to the rear end portion 6 of the link 2 with respect to the fitting portion 15 and form a pair, while extending along the traveling direction X1 of chain, to be parallel to each other. Each loosely fitting portion 16 is connected to the corresponding end portion of the fitting portion 15 smoothly (without any step). A space defined between the respective loosely fitting portions 16 is larger than the cross section of the second driving pin 4, and the second driving pin 4 is therefore allowed to undergo rolling motions with respect to the corresponding first driving pin 3.

The rear through-hole 8 is positioned at an other end portion (the rear end portion 6 of the link 2) of the long hole 14 with respect to the traveling direction X1 of chain, and is defined by a fitting portion 18 and a loosely fitting portions 19 provided on the peripheral edge of the long hole 14. The fitting portion 18 is formed in a shape to correspond to the shape of a fit portion 20 formed in a part of the peripheral surface of the second driving pin 4. The loosely fitting portions 19 are disposed at positions closer to the front end portion 5 in the link 2 with respect to the fitting portion 18 and form a pair, while extending along the traveling direction X1 of chain, to be parallel to each other. Each loosely fitting portion 19 is connected to the corresponding end portion of the fitting portion 18 smoothly (without any step). A space defined between the respective loosely fitting portions 19 is formed larger than the cross section of the first driving pin 3, and the first driving pin 3 is therefore allowed to undergo rolling motions with respect to the corresponding second driving pin 4.

The communication groove 11 is positioned between the front through-hole 7 and the rear through-hole 8. The communication groove 11 is defined by a pair of intermediate portions 21 on the peripheral edge of the long hole 14. The intermediate portions 21 in a pair extend along the traveling direction X1 of chain, to be parallel to each other. Each intermediate portion 21 is connected to the loosely fitting portion 16 smoothly (without any step) at one end, and is also connected to the loosely fitting portion 19 smoothly (without any step) at an other end. The configuration as above allows the link 2 to undergo elastic deformation more readily on the peripheral edge of the long hole 14, in particular, in proximity to each intermediate portion 21.

Although the groove width of the communication groove 11 is not particularly limited, in the case of FIG. 5, the groove width of the communication groove 11 is made almost equal to the widths of the front through-hole 7 and the rear through-hole 8. In this case, assume that the first and second driving pins 3 and 4 loosely fit into the link 2 are not guided by the corresponding guiding members 12 and 13, then, the engagement state of the first and second driving pins 3 and 4 with respect to the link 2 becomes instable. A contact state of the first and second driving pins 3 and 4 that are adjacent to each other in the traveling direction X1 of chain, therefore, becomes instable, and there may be a risk that the contact between the respective driving pins 3 and 4 is released.

On the contrary, according to this embodiment, as shown in FIG. 4 and FIG. 6, the first and second driving pins 3 and 4 that are adjacent to each other in the traveling direction X1 of chain, are correlated with each other with the use of the first and second guiding members 12 and 13 to prevent the contact between these pins from being released.

To be more concrete, the first guiding members 12 are disposed, respectively, at a pair of the end portions of the first and second driving pins 3 and 4 in a set, for example, at the pair of the end portions of the first and second driving pins 3 and 4 that are inserted through the front through-holes 7 in the links 2 of the second link unit 52. The first guiding member 12 is shaped like a disc with a first insert hole 22 being formed at the center. The inner peripheral surface of the first insert hole 22 includes a first fitting portion 23 and a first loosely fitting portion 24.

The first fitting portion 23 is formed in a shape corresponding to the shape of the fit portion 17 of the first driving pin 3, so that the fit portion 17 of the corresponding first driving pin 3 is fit by being press-fit therein. The corresponding second driving pin 4 is loosely fit into the first loosely fitting portion 24. The second driving pin 4 is thus allowed to undergo rolling motions while it keeps contact with the first driving pin 3. The first loosely fitting portion 24 is provided with a first guiding surface 25 used to guide rolling and contacting movements of the second driving pin 4 to the corresponding first driving pin 3.

Referring to FIG. 6, the first driving pin 3 and the second driving pin 4 paired with each other include, respectively, opposing portions 31 and 32 that oppose each other. The first driving pin 3 comes into contact with the second driving pin 4 as a counterpart of the pair at a contact point T. FIG. 6 corresponds to the link 2 in a linear region L1 (see FIG. 1) of the chain 1, and the contact point T of the first and second driving pins 3 and 4 is denoted as a contact point T1. The position of the contact point T1 corresponds to the position of the starting point of an involute curve described below.

The opposing portions 31 and 32 are provided, respectively, on the peripheral surfaces of the first and second driving pins 3 and 4. Actually, the contact point T is equivalent to a tangent line between the opposing portions 31 and 32 of the first and second driving pins 3 and 4, which is a line extending in the width direction W1 of chain viewed along the width direction W1 of chain.

The first driving pin 3 and the second driving pin 4 undergo rolling and sliding while displacing their contact point T by following the mutual bending of THE links 2 of the link units that are adjacent to each other in the traveling direction X1 of chain. In this instance, the locus of movement of the contact point T by the rolling and sliding form an involute curve.

In practice, the opposing portion 32 of the second driving pin 4 is formed as a flat plane (illustrated as a straight line in FIG. 6) extending in the width direction W1 of chain, while the opposing portion 31 of the first driving pin 3 is formed as a curved plane. When the curved plane of the opposing portion 31 is viewed along the width direction of chain, the locus show the involute curve as described above.

In addition, for the chain 1, a linking pitch P to link a link unit to another that are disposed adjacently in the traveling direction of chain is set to a predetermined quantity. The linking pitch P is a disposition interval between a pair of the first driving pins 3 and 3 that are adj acent to each other in the traveling direction X1 of chain in the linear region L1 (see FIG. 1) of the chain 1. To be more concrete, the linking pitch P corresponds to a distance with respect to the traveling direction X1 of chain between the contact point T1 of the first driving pin 3 and the second driving pin 4 within the front through-hole 7 in the link 2 in the linear region of the chain 1 and the contact point T1 of the first driving pin 3 and the second driving pin 4 within the rear through-hole 8 in this link 2.

As shown in FIG. 7A, in a state where the first guiding member 12 is viewed from the side, when the second driving pin 4 undergoes rolling motions with respect to the corresponding first driving pin 3, the second driving pin 4 follows the trajectories shown in FIG. 7A (the hatching for the second driving pin 4 is omitted in the drawing). The first driving surface 25 is formed in a shape corresponding to these trajectories.

Referring to FIG. 4 and FIG. 6 again, the second guiding members 13 are respectively disposed at a pair of the end portions of the first and second driving pins 3 and 4 in a set, for example, at a pair of the end portions of the first and second driving pins 3 and 4 that are inserted through the rear through-holes 8 in the links 2 of the second link unit 52. The second guiding member 13 is shaped like a disc with a second insert hole 26 being made at the center. The inner peripheral surface of the second insert hole 26 includes a second fitting portion 27 and a second loosely fitting portion 28.

The second fitting portion 27 is formed in a shape corresponding to the shape of a fit portion 20 of the second driving pin 4, so that the fit portion 20 of the corresponding second driving pin 4 is fit by being press-fit therein. The corresponding first driving pin 3 is loosely fit into the second loosely fitting portion 28, which allows the first driving pin 3 to undergo rolling motions with respect to the second driving pin 4, both of which come into contact with each other. The second loosely fitting portion 28 is provided with a second guiding surface 29 used to guide rolling and contacting movements of the first driving pin 3 to the corresponding second driving pin 4.

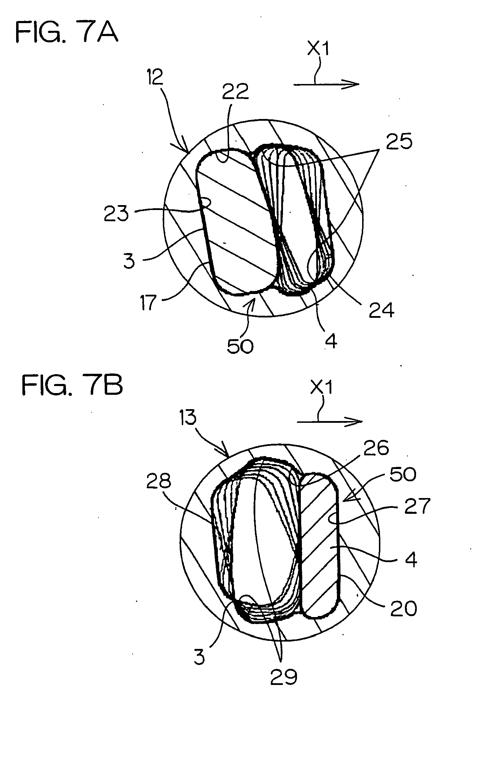

As is shown in FIG. 7B, in a state were the second guiding member 13 is viewed from the side, when the first driving pin 3 undergoes rolling motions with respect to the corresponding second driving pin 4, the first driving pin 3 follows trajectories shown in FIG. 7B (the hatching for the first driving pin 3 is omitted in the drawing). The second guiding surface 29 is formed in a shape corresponding to these trajectories.

As has been described, according to this embodiment, because the corresponding first and second driving pins 3 and 4 are correlated with each other by the first and second guiding members 12 and 13, it is possible to prevent the generation of backlush between the respective driving pins 3 and 4 by allowing each to undergo the rolling and contacting movements in a reliable manner.

In addition, it is not necessary for the links 2 to perform the function of guiding the rolling and contacting movements of the first and second driving pins 3 and 4. This eliminates the need to provide guiding portions on the front through-hole 7 and the rear through-hole 8 in the link 2, which can in turn reduce the manufacturing costs. Further, when the power transmission chain 1 is assembled, a work to insert the respective driving pins 3 and 4 through the respective through-holes 7 and 8 in the links 2 becomes easier. The manufacturing costs can be reduced from this regard, too.

Because the guiding members 12 and 13 are provided correspondingly to each connecting member 50, neither the guiding members 12 nor 13 undergo tensile force as the links 2 do. It is therefore possible to increase durability.

Further, the peripheral edge portion of the communication groove 11 in each link 2 is allowed to undergo elastic deformation more readily. This markedly reduces initial stress and stress during power transmission applied on the peripheral edges of the respective through-holes 7 and 8 into which the corresponding first and second driving pins 3 and 4 are press-fit. It is therefore possible to prevent excessive concentration of stress in each link 2 during power transmission, which in turn makes it possible to transmit as large power as possible. In addition, durability can be enhanced markedly.

Moreover, because the communication groove 11 is provided, it is possible to make the entire chain 1 lighter by reducing the weight of each link 2.

The numbers of the first and second guiding members 12 and 13 are not limited to those specified in the embodiment above, and it is sufficient to provide at least one member for each set of the corresponding first and second driving pins 3 and 4. For example, one of the first and second guiding members 12 and 13 may be provided at any of the one end portion, the other end portion, and the intermediate portion in the axial direction of the corresponding first and second driving pins 3 and 4. Alternatively, three or more respective members may be provided to the corresponding first and second driving pins 3 and 4.

Further, in the embodiment above, the positions of the first guiding member 12 and the second guiding member 13 may be replaced with each other. Moreover, either one of the first and second guiding members 12 and 13 alone may be provided to the respective driving pins 3 and 4.

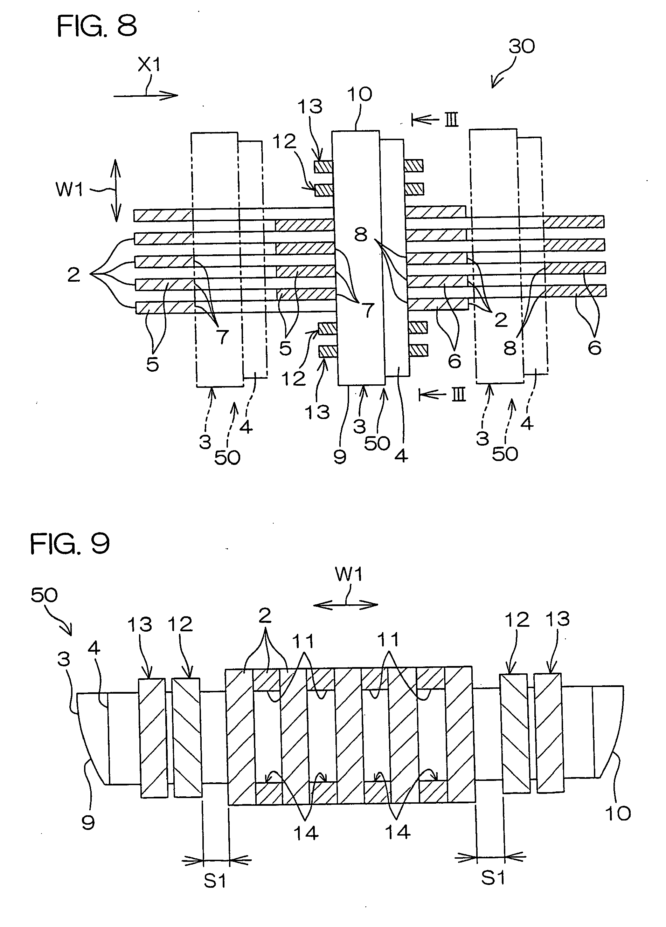

Next, FIG. 8 is a cross section of a major portion of a power transmission chain 30 according to another embodiment of the invention. FIG. 9 is a cross section taken along the line III-III of FIG. 8. Hereinafter, only differences from the embodiment shown in FIG. 4 will be described chiefly. Similar components are therefore labeled with the same reference numerals, and the descriptions of such components are omitted.

Referring to FIG. 8, following two points are the main differences of this embodiment from the embodiment shown in FIG. 2. That is, the first and second driving pins 3 and 4 are fit into both the front through-hole 7 and the rare through-hole 8 in each link 2 in a movable manner, and the first and second guiding members 12 and 13 cooperate with each other to prevent fall-off of the link 2 from the first and second driving pins 3 and 4.

The first and second guiding members 12 and 13 are provided for each set of the first and second driving pins 3 and 4 that come into rolling contact with each other. To be more concrete, the first and second guiding members 12 and 13 are provided, respectively, at a pair of the end portions of each set of the first and second driving pins 3 and 4. Each link 2 is sandwiched by these first and second guiding members 12 and 13 with respect to the width direction W1 of chain.

Either the first or second guiding members 12 or 13 is disposed adjacently to the link 2 respectively at a pair of the end portions of the first and second driving pins 3 and 4, and the other are disposed on the outside (closer to the corresponding end portion of the first driving pin 3) of the one pin. For example, the first guiding members 12 are disposed adjacently to the link 2, while the second guiding members 13 are disposed on the outside of the first guiding member 12. It should be noted, however, that the second guiding member 13 may be disposed adjacently to the link 2.

As is shown in FIG. 9, a space S1 is provided between each first guiding member 12 and the adjacent link 2 with respect to the width direction W1 of chain. This configuration enables the first driving pin 3 to move (skew) in the width direction W1 of chain with respect to the first driving pin 3 that is disposed adjacently in the traveling direction X1 of chain. In other words, each link 2 is allowed to move in the width direction W1 of chain with respect to the adjacent link 2, which can in turn prevent excessive frictional resistance caused by physical contact of the links 2. It is therefore possible to markedly enhance the transmission efficiency by reducing a driving loss sufficiently. It is also possible to markedly reduce noises arising from contact of the respective links 2.

Further, even at the occurrence of misalignment resulting from displacement of the relative positions of the drive pulley 60 and the driven pulley 70, the first driving pin 3 moves (skews) in the width direction W1 of chain, to allow such a misalignment.

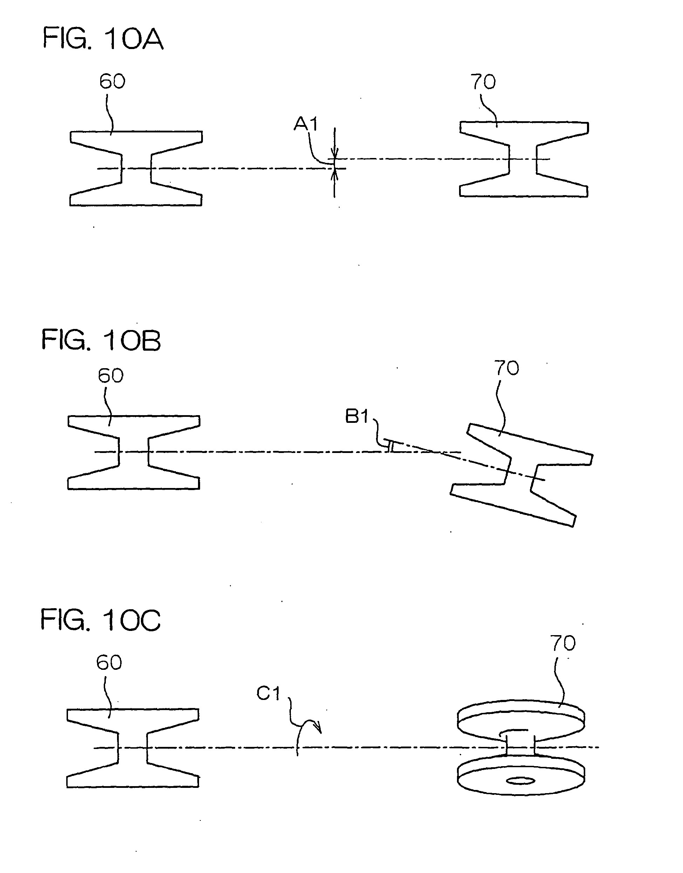

The misalignment referred to herein means: a misalignment A1 that causes a displacement in the horizontal direction (a direction orthogonal to the power transmission direction) between the drive pulley 60 and the driven pulley 70 as is shown in FIG. 10A; a misalignment B1 caused as the drive pulley 60 and the driven pulley 70 are oriented in different directions as is shown in FIG. 10B; a misalignment C1 caused when the drive pulley 60 and the driven pulley 70 are rotated to be twisted as is shown in FIG. 10C; or a misalignment as a combination of at least two of these misalignments A1, B1, and C1.

In short, various misalignments can be allowed with the use of the chain 30. It is therefore possible to prevent abnormal wearing on the first driving pin 3 and the corresponding sheave surfaces 62a, 63a, 72a and 73a by, for example, preventing the first driving pin 3 from coming into contact with the corresponding sheave surfaces 62a, 63a, 72a, and 73a at the corner. The service life can be therefore extended markedly.

According to this embodiment, because the corresponding first and second driving pins 3 and 4 are correlated with each other by the first and second guiding members 12 and 13, it is possible to prevent the generation of backlush between the respective driving pins 3 and 4 by enabling each to undergo rolling and contacting movements in a reliable manner. Moreover, because the first and second guiding members 12 and 13 also has the function of preventing the links 2 from falling off from the first and second driving pins 3 and 4, there is no need to provide special fall-off preventing members separately. A reduction both in size and cost can be therefore achieved by making the structure simpler.

In addition, the peripheral edge portion of the communication groove 11 of each link 2 is allowed to undergo elastic deformation more readily. Moreover, because the first and second driving pins 3 and 4 are fit into the respective through-holes 7 and 8 in each link 2 at a strength at which these pins are allowed to move, it is possible to markedly reduce initial stress and stress during power transmission applied on the peripheral edges of the respective through-holes 7 and 8. It is therefore possible to prevent excessive concentration of stress in each link 2 during power transmission, which makes it possible to transmit as large power as possible. Further, durability can be enhanced markedly.

Further, because the communication groove 11 is provided, it is possible to make the entire chain 1 lighter by reducing the weight of each link 2.

In this embodiment, the positions of the first and second guiding members 12 and 13 in each set may be replaced. Further, each embodiment above has described a case where the first driving pin 3 alone comes into contact with the sheave surface to transmit power. The invention, however, is not limited to this case, and the invention can be applied to a case where both the first and second driving pins 3 and 4 come into contact with the sheave surfaces to transmit power.

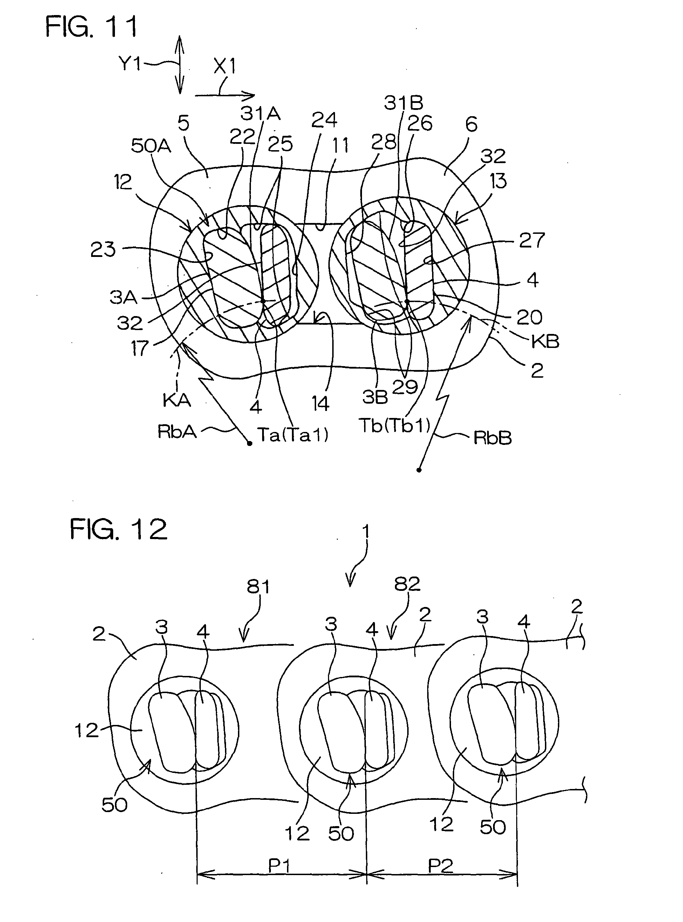

In each of the embodiments above, connecting members of a plurality of kinds may be used as the connecting member. For example, as is shown in FIG. 11, there is a case where two kinds of connecting member, a first connecting member 50A and a second connecting member 50B, are used. The locus of the movement of the contact point Ta formed by rolling and sliding between the first driving pin 3A and the corresponding second driving pin 4 of the first connecting member 50A and the locus of the movement of the contact point Tb formed by rolling and sliding between the first driving pin 3B and the corresponding second driving pin 4 of the second connecting member 50B are set to be different from each other.

To be more concrete, when viewed in the width direction W of chain, the shape of a opposing portion 31A of the first driving pin 3A and the shape of a opposing portion 31B of the first transmission pin 3B are different. In other words, when the linear region of the chain 1 is viewed along the width direction W of chain, a radius RbA of a base circle KA of an involute curve shaped by the opposing portion 31A of the first driving pin 3A and a radius RbB of a base circle KB of an involute curve shaped by the opposing portion 31B of the first driving pin 3B are different from each other. For example, the radius RbB is set larger than the radius RbA (RbA < RbB).

The first connecting members 50A and the second connecting members 50B are arrayed randomly at least in part of the chain 1 in the traveling direction X of chain. The first connecting members 50A and the second connecting members 50B may be arrayed randomly across the entire region of the chain 1 in the traveling direction X1 of chain. It is, however, sufficient that at least one of the first connecting members 50A and the second connecting members 50B are arrayed randomly at least in part of the chain 1 in the traveling direction X of chain.

The phrase, "to be arrayed randomly", referred to herein means an array in which at least either periodicity or regularity is missing. For example, there is a case where the first connecting members 50A and the second connecting members 50B are arrayed with respect to the traveling direction X1 of chain, in order of 50A, 50B, 50B, 50A, 50B, 50B, 50B, 50A, 50B, 50B, 50B, 50B, 50B, 50A, 50B, 50B, 50B, 50B, 50B, 50B, 50B, and so forth.

To be more concrete, at least one of the first driving pins 3A and the first driving pins 3B are disposed on an irregular basis at least in part of the chain 1 in the traveling direction X of chain. This configuration makes it possible for the occurrence cycle of engaging sounds produced when the respective first driving pins 3A and 3B successively engage with each pulley to be on a random basis, which in turn allows the frequency of the engaging sounds to be distributed over a broad range. It is thus possible to reduce noises further when the chain 1 is driven.

In the linear region of the chain 1, in order to prevent the occurrence of unwanted moment between the respective first driving pins 3 and the corresponding second driving pins 4, it is preferable that the position of the contact point Ta1 between the first driving point 3A and the corresponding second driving pin 4 of the first connecting member 50A, and the position of the contact point Tb1 between the first driving pin 3B and the corresponding second driving pin 4 of the second connecting member 50B are aligned along the traveling direction X1 of chain. It should be noted, however, that the position of the contact point Ta1 and the position of the contact point Tb1 may be offset in an orthogonal direction Y1 that is orthogonal to both the traveling direction X1 of chain, and the width direction W1 of chain.

Let the contact point Ta of the first driving pin 3A and the corresponding second driving pin 4 in the chain linear region P1 be an origin, the traveling direction X1 of chain be the x-axis, the orthogonal direction Y1 be the y-axis, and an angle between the tangential direction of the first driving pin 3A and the y-axis at the contact position of the first driving pin 3A and the corresponding second driving pin 4 in a curved region of the chain be γ. Then, an involute curve shaped by the opposing portion 31A of the first driving pin 3A is expressed, for example, by Equations (i) and (ii) below:

$$x = RbA \cdot (\sin \gamma - \gamma \cdot \cos \gamma) \qquad \dots (i)$$

$$y = RbA \cdot (\cos \gamma + \gamma \cdot \sin \gamma) - RbA \quad \dots (ii)$$

where RbA is the radius of the base circle.

The same can be said with respect to equations of the involute curve shaped by the opposing portion 31B of the first driving pin 3B.

Further, in each embodiment above, as is shown in FIG. 12, there may be a case where the plurality of link units described above include link units 81 of a first specification and link units 82 of a second specification.

A disposition interval P1 (equivalent to a linking pitch) between the first driving pins 3 and 3 disposed at the beginning and the end of the link 2 of the link unit 81 of the first specification in the traveling direction X1 of chain, and a disposition interval P2 (equivalent to a linking pitch) between the first driving pins 3 disposed at the beginning and the end of the link 2 of the link unit 82 of the second specification in the traveling direction X1 of chain, are different from each other. To be more concrete, the disposition interval P1 is made longer than the disposition interval P2. Further, the link units 81 of the first specification and the link units 82 of the second specification are arrayed randomly at least in part of the chain 1 in the traveling direction X1 of chain. The link units 81 of the first specification and the link units 82 of the second specification may be arrayed randomly across the entire region in the traveling direction X1 of chain. It is, however, sufficient that at least one of the link units 81 of the first specification and the link units 82 of the second specification are arrayed randomly at least in part in the traveling direction X1 of chain. The phrase, "to be arrayed randomly", referred to herein means an array in which at least either periodicity or regularity is missing.

In the embodiment of FIG. 12, it is also possible for the occurrence cycle of engaging sounds produced when the respective first driving pins 3 and 3 successively engage with each pulley to be on a random basis, which in turn allows the frequency of the engaging sounds to be distributed over a broad range. It is thus possible to reduce noises further when the chain 1 is driven.

The random array relating to the involute of FIG. 11 and the random array relating to the linking pitch of FIG. 12 may be used in combination.

It should be noted that the power transmission device of the present invention is not limited to the embodiment in which the widths of grooves in both the drive pulley 60 and the driven pulley 70 are varied, and it may be also applied to an embodiment in which the width of the groove of one of these pulleys alone varies while the width of the groove of the other pulley is fixed. Further, the embodiment in which the widths of the grooves of the drive pulley 60 and the driven pulley 70 vary continuously (in a stepless manner) has been described, however, the invention can be applied to other power transmission devices in which the widths of grooves vary step by step or the widths of grooves are fixed (no shifting).

Further, the case where power is transmitted as the power transmission surfaces 9 and 10 (end faces) of the first driving pin 3 come into contact with the corresponding sheave surfaces 62a, 63a, 72a, and 73a has been described. The invention, however, is not limited to this case, and power may be transmitted as both the first and second driving pins 3 and 4 come into contact with the sheave surfaces. Alternatively, a chain of another type provided with another power transmission member, for example, a power transmission block in which a power transmission surface is provided to the chain forming member, such as pins and links, may be used.

Further, in each embodiment above, a pair of intermediate portions 21 of the long hole 14 in each link 2 may be changed to a convex curved shape so as to shorten a distance from one to the other. The distance therefore becomes narrower than the widths of the front through-hole 7 and the rear through-hole 8.

Furthermore, in each embodiment above, the communication grooves 11 may be omitted, and instead, the front through-hole 7 and the rear through-hole 8 in the link 2 are partitioned from each other via a pillar portion.

While the concrete embodiments of the present invention have been described in detail, modifications, alternations, and equivalents of the present invention readily occur to those skilled in the art who understand the content of the description above. It should be therefore appreciated that invention covers the scope of claims and the scope of equivalents.

This application is based upon the prior Japanese Patent Application No. 2004-62919 filed with the Japanese Paten Office on March 5, 2004, the entire contents of which are incorporated herein by reference.

**Claims**

1. A power transmission chain, comprising:

   a plurality of link units aligned in a traveling direction of chain;
   a plurality of connecting members that link the plurality of link units to one another in a manner so as to be bendable; and
   guiding members provided correspondingly to the respective connecting members,

   wherein:

   each of the link units includes a plurality of links aligned in a width direction of chain orthogonal to the traveling direction of chain;
   each of the links includes first and second through-holes aligned in the traveling direction of chain for a corresponding connecting member to be inserted therethrough;
   each of the connecting members includes first and second power transmission members; and
   either one of the first and second power transmission members is guided by the guiding member, and consequently the one power transmission member moves to the other transmission member while coming into contact with the other power transmission member in a contact state including at least one of rolling contact and sliding contact.

2. The power transmission chain according to Claim 1, wherein each of the links further includes a communication groove through which the first and second through-holes communicate with each other.

**3.** The power transmission chain according to Claim 1, wherein:

a corresponding first power transmission member is fit into the first through-hole in each of the links in a manner so as to enable relative movements, and a corresponding second power transmission member is fit therein in a manner so as to inhibit relative movements; and
a corresponding second power transmission member is fit into the second through-hole in each of the links in a manner so as to enable relative movements, and a corresponding first power transmission member is fit therein in a manner so as to inhibit relative movements.

**4.** The power transmission chain according to Claim 3, wherein at least one guiding member is provided correspondingly to each of the connecting members as the guiding member.

**5.** The power transmission chain according to Claim 4, wherein the at least one guiding member is disposed at an arbitrary position on the connecting member in the width direction of chain.

**6.** The power transmission chain according to Claim 1, wherein:

the guiding member includes an insert hole; and
the one power transmission member is fit into the insert hole with an play, and the other power transmission member is fixed therein.

**7.** The power transmission chain according to Claim 6, wherein the other power transmission member is fixed by being press-fit into the insert hole.

**8.** The power transmission chain according to Claim 6, wherein an inner peripheral surface of the insert hole includes a guiding surface to guide the one power transmission member.

**9.** The power transmission chain according to Claim 1, wherein:

both a corresponding first power transmission member and a corresponding second power transmission member are respectively fit into the first through-hole in each of the links in a manner so as to enable relative movements; and
both a corresponding first power transmission member and a corresponding second power transmission member are respectively fit into the second through-hole in each of the links in a manner so as to enable relative movements.

**10.** The power transmission chain according to Claim 9, wherein:

first and second guiding members are provided, respectively, at each end portion of a pair of end portions of a corresponding connecting member as the guiding member; and
the first and second guiding members cooperate to prevent falling off of the corresponding connecting member and the corresponding link.

**11.** The power transmission chain according to Claim 9, wherein:

the first guiding member includes a first insert hole, to which a corresponding first power transmission member is fixed and into which a corresponding second power transmission member is fit with an play;
the first insert hole includes a first guiding surface that guides the corresponding second power transmission member for causing the corresponding second power transmission member to come into contact with the corresponding first power transmission member in a contact state including at least one of rolling contact and sliding contact;
the second guiding member includes a second insert hole, to which a corresponding second power transmission member is fixed and into which a corresponding first power transmission member is fit with an play; and
the second insert hole includes a second guiding surface that guides the corresponding first power transmission member for causing the corresponding first power transmission member to come into contact with the corresponding second power transmission member in a contact state including at least one of rolling contact and sliding contact.

**12.** The power transmission chain according to Claim 11, wherein the corresponding first power transmission member is fixed by being press-fit into the first insert hole of the first guiding member.

**13.** The power transmission chain according to Claim 1, wherein a locus of movement of a contact point between the first and second power transmission members of each of the connecting members shape an involute curve.

**14.** The power transmission chain according to Claim 13, wherein:

the plurality of connecting members include the first and second connecting members;
the locus of the movement of the contact point of the first and second power transmission members of the first connecting members and the locus of the movement of the contact point of the first and second power transmission members of the second connecting members are different from each other; and
at least one of the first connecting members and the second connecting members are arrayed randomly at least in a partial region of the power transmission chain in the traveling direction of chain.

**15.** The power transmission chain according to Claim 1, wherein:

the plurality of link units include link units of a first specification and link units of a second specification;
a disposition interval between the first power transmission member inserted through the first through-hole and the first power transmission member inserted through the a second through-hole in each link of the link units of the first specification is relatively long;
a disposition interval between the first power transmission member inserted through the first through-hole and the first power transmission member inserted through the second through-hole in each link of the link units of the second specification is relatively short; and
at least one of the link units of the first specification and the link units of the second specification are arrayed randomly at least in a partial region of the power transmission chain in the traveling direction of chain.

**16.** A power transmission device, comprising:

first and second pulleys having, respectively, a pair of sheave surfaces that oppose to each other in a shape of a circular conical surface,
wherein power is transmitted between the first and second pulleys via the power transmission chain according to any of Claims 1 through 15.

FIG. 1

EP 1 722 127 A1

FIG. 2

FIG. 3

FIG. 4

FIG. 5

FIG. 6

FIG. 7A

FIG. 7B

FIG. 8

FIG. 9

FIG. 10A

FIG. 10B

FIG. 10C

# FIG. 11

# FIG. 12

## INTERNATIONAL SEARCH REPORT

| | International application No. |
|---|---|
| | PCT/JP2005/004380 |

**A. CLASSIFICATION OF SUBJECT MATTER**
$Int.Cl^7$  F16G5/18, F16H9/24

According to International Patent Classification (IPC) or to both national classification and IPC

**B. FIELDS SEARCHED**

Minimum documentation searched (classification system followed by classification symbols)
$Int.Cl^7$  F16G5/18, F16H9/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2002-242994 A  (Luk Lamellen und Kupplungsbau Beteiligungs KG.), 28 August, 2002 (28.08.02), Par. Nos. [0009] to [0018], [0021]; Figs. 1 to 8, 13 & DE 10203942 A1 | 1-5,9,10,16<br>13-15<br>6-8,11,12 |
| Y | JP 8-312725 A  (Gear Chain Industrial B.V.), 26 November, 1996 (26.11.96), Par. Nos. [0041], [0042]; Fig. 9 & EP 741255 A1 Column 5, line 56 to column 6, line 19; Fig. 9 & US 5728021 A Column 5, lines 37 to 57; Fig. 9 | 13 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>11 May, 2005 (11.05.05) | Date of mailing of the international search report<br>31 May, 2005 (31.05.05) |
|---|---|
| Name and mailing address of the ISA/<br>　　Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/004380 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2001-3996 A (Tsubakimoto Chain Co.),<br>09 January, 2001 (09.01.01),<br>Par. No. [0012]<br>& US 6432011 B1<br>Column 4, line 47 to column 5, line 3 | 14 |
| Y | JP 2002-147542 A (Luk Lamellen und<br>Kupplungsbau Beteiligungs KG.),<br>22 May, 2002 (22.05.02),<br>Par. No. [0038]<br>& US 2002/68654 A1<br>Par. No. [0054]<br>& DE 10139123 A1         & FR 2813650 A1 | 15 |

Form PCT/ISA/210 (continuation of second sheet) (January 2004)

**EP 1 722 127 A1**

## REFERENCES CITED IN THE DESCRIPTION

### Patent documents cited in the description

- JP 1108444 U
- JP 8312725 A

- JP 2004062919 A